# EUROPÄISCHE PATENTSCHRIFT

(11) **EP 2 187 088 B1**
(45) Veröffentlichungstag und Bekanntmachung des Hinweises auf die Patenterteilung: **05.01.2011**
(21) Anmeldenummer: 09013424.8
(22) Anmeldetag: 23.10.2009
(51) Int. Cl.: F16F 15/14

(54) **Schwingungstilger**
Rotational vibration damper
Réducteur de vibrations rotatif

(30) Priorität: 12.11.2008 DE 102008056918
(43) Veröffentlichungstag der Anmeldung: 19.05.2010
(73) Patentinhaber: SGF Süddeutsche Gelenkscheibenfabrik GmbH & Co. KG, 84478 Waldkraiburg (DE)
(72) Erfinder: Löw, Johann, 84518 Garching (DE); Huber, Florian, 84574 Taufkirchen (DE); Reihle, Joachim, 83530 Schnaitsee (DE)
(74) Vertreter: Thum, Bernhard

(56) Entgegenhaltungen:
- DE-A1- 3 534 519
- DE-C1- 4 307 583
- DE-C1- 4 430 036

## Beschreibung

Die vorliegende Erfindung betrifft einen Schwingungstilger, insbesondere für einen Antriebsstrang eines Kraftfahrzeugs, mit einem um eine Drehachse drehbaren Innenring, einem zu dem Innenring im wesentlichen koaxialen Massering, der in einem radialen Abstand zu dem Innenring angeordnet ist, einer Mehrzahl von Federelementen aus gummielastischem Material, die den Innenring und den Massering miteinander verbinden, und einer Mehrzahl von Gleitkörpern zur Abstützung des Schwingungstilgers in radialer Richtung, wobei sich die Gleitkörper an eine Innenumfangsfläche des Masserings anlegen und zu dieser relativ verlagerbar sind.

Derartige Schwingungstilger sind aus dem Stand der Technik bekannt und beispielsweise in DE 43 07 583 C1 offenbart. Dieses Dokument offenbart einen Drehschwingungstilger mit einem Tragkörper und einem Schwungring, die über sechs elastische Segmente miteinander verbunden sind. Die Segmente bestehen aus Gummi und sind an eine innere Mantelfläche des Schwungrings und an eine äußere Mantelfläche des Tragkörpers anvulkanisiert. An die äußere Mantelfläche des Tragkörpers sind drei aus Gummi bestehende Halterungen anvulkanisiert. In jede der Halterungen ist ein Gleitkörper aus einem hartelastischem Werkstoff axial eingeschoben. Die Gleitkörper weisen eine Gleitfläche auf, mit der sie sich teilweise an die innere Mantelfläche des Schwungrings anlegen. Die Gleitkörper sind ferner in Form einer Brücke mit einem Brückenbogen und zwei Brückenstützen ausgebildet. Die Brückenstützen werden in den Halterungen aufgenommen, wobei zwischen den Brückenstützen und den Halterungen ein Zwischenraum vorgesehen ist, der bei radialer Belastung des Drehschwingungstilgers geschlossen wird. Ferner ist zwischen dem Brückenbogen und den Halterungen ein Schmiermittelkanal ausgebildet.

Ferner beschreibt Dokument DE 44 30 036 C1 einen Drehschwingungstilger mit Gleitsteinen, die jeweils in einem Zwischenraum zwischen einem Paar Halterungen angeordnet sind und eine Füllung aufweisen.

Die aus dem Stand der Technik bekannten Drehschwingungsälger weisen gerade im Hinblick auf die Gleitstein/Halterungs-Anordnungen einen relativ komplexen Aufbau bzw. eine komplexe Geometrie auf, wie beispielsweise bei den Gleitstein/HalterungsAnordnungen gemäß DE 43 07 583 C1 mit der Brückenform der Gleitsteine und den Halterungen, sowie dem zwischen diesen gebildeten Zwischenraum.

Der voranstehend beschriebene relativ aufwändige Aufbau der aus dem Stand der Technik bekannten Drehschwingungstilger ist jedoch notwendig, um den Grad der radialen Abstützung des Schwungrings in eingeschränktem Maß beeinflussen zu können. Wegen der beschränkten Einstellbarkeit auf Schwingungsfrequenzen in radialer Richtung entsprechen die herkömmlichen Drehschwingungstilger den gestiegenen Anforderungen der Automobilindustrie an die Schwingungsdämpfung im Bereich des Antriebsstrangs nicht mehr.

Es ist somit eine Aufgabe der vorliegenden Erfindung, einen Schwingungstilger der eingangs bezeichneten Art bereitzustellen, der bei einfachem Aufbau die gestiegenen Anforderungen an die Schwingungsdämpfung erfüllen kann.

Diese Aufgabe wird mit einem Schwingungstilger der eingangs bezeichneten Art gelöst, bei dem wenigstens ein Gleitkörper einem Dämpfungskörper zugeordnet ist, der aus einem elastischen deformierbaren Material ausgebildet und zwischen Innenring und Gleitkörper angeordnet ist.

Der erfindungsgemäße Schwingungstilger bietet aufgrund der Anordnung eines "einfachen" einteiligen Gleitkörpers auf einem Dämpfungskörper die Möglichkeit verschiedene Frequenzbereiche in torsionaler Richtung und radialer Richtung unabhängig voneinander zu beeinflussen, da der Schwingungstilger auf Drehschwingungsfrequenzen durch die Federelemente und auf radiale Schwingungsfrequenzen durch die Dämpfungskörper mit den Gleitsteinen abgestimmt werden kann. Durch die Dämpfungskörper aus elastisch deformierbarem Material und die Gleitkörper kann der Schwingungstilger gezielt auch auf Frequenzen in radialer Richtung eingestellt werden. Durch Vergrößern oder Verkleinern der Dicke des Gleitkörpers kann die Steifigkeit des Schwingungstilgers in radialer Richtung erhöht oder gesenkt werden, wodurch je nach Bedarf verschiedene Frequenzbereiche kompensiert werden können. Beispielsweise kann durch Verwendung dickerer Gleitkörper und eines dünneren federnden Dämpfungskörper die Steifigkeit in radialer Richtung erhöht und damit der Schwingungstilger konkret auf einen gewünschten zu kompensierenden Frequenzbereich eingestellt werden kann.

Der erfindungsgemäße Schwingungstilger weist eine einfacheren Aufbau verglichen zu dem Stand der Technik auf, da insbesondere die mehrteiligen Gleitsteine bzw. die Gleitstein/Halterungs-Anordnungen wegfallen. Aufgrund des vereinfachten Aufbaus kann auch die Herstellung des Schwingungstilgers vereinfacht werden, da statt der bisher mehrteiligen Gleitkörper ein einzelner Gleitkörper über einen Dämpfungskörper an dem Innenring des Schwingungstilgers angebracht wird.

Um den Schwingungstilger auf Frequenzen in radialer Richtung möglichst genau abstimmen zu können, sieht eine bevorzugte Ausführungsform der Erfindung vor, dass der wenigstens eine Dämpfungskörper wenigstens eine Ausnehmung aufweist. Mit anderen Worten wird der Schwingungstilger auf die jeweilige Frequenz in radialer Richtung über die Steifigkeit des Gummipolsters mit den darin ausgebildeten Ausnehmungen abgestimmt. Andererseits haben die Dämpfungskörper trotz ihrer Ausnehmungen aber eine noch ausreichende Steifigkeit zur radialen Abstützung des Masserings, um Umwuchteffekte in einem Frequenzbereich unterhalb der Eigenfrequenz zu unterbinden und im Resonanzfall, d.h. dann, wenn der Schwingungstilger mit seiner Eigenfrequenz angeregt wird, relativ große Schwingwege des Masserings in radialer Richtung zuzulassen. In diesem Zusammenhang ist zu erwähnen, dass die wenigstens eine Ausnehmung den wenigstens einen Dämpfungskörper in axialer Richtung zumindest teilweise, vorzugsweise vollständig, durchsetzt.

Um den Schwingungstilger auf verschiedene Anwendungsgebiete, d.h. auf verschiedene Fahrzeugtypen mit unterschiedlich dimensionierten Antriebssträngen, abstimmen bzw. anpassen zu können, weisen die Ausnehmungen in den Dämpfungskörpern unterschiedliche Formen auf. Gemäß einer Weiterbildung der Erfindung weist die wenigstens eine Ausnehmung in Umfangsrichtung einen länglichen Verlauf auf. Ferner kann vorgesehen sein, dass gemäß einer bevorzugten Ausführungsform der Erfindung die wenigstens eine Ausnehmung an ihren Enden aufgeweitet und zwischen ihren Enden einander zugewandte Kontaktflächen aufweist. Ferner sieht eine bevorzugte Ausführungsform der Erfindung vor, dass die wenigstens eine Ausnehmung um die Drehachse des Schwingungstilgers herum einen gekrümmten Verlauf aufweist.

Alternativ zu den voranstehend beschriebenen länglichen Ausnehmungen kann gemäß einer bevorzugten Ausführungsform der Erfindung ein Dämpfungskörper auch mit einer Mehrzahl in axialer Richtung verlaufender zylindrischer Ausnehmungen vorgesehen sein.

Um eine möglichst unabhängige Abstimmung des Schwingungstilgers auf Frequenzen in torsionaler Richtung und radialer Richtung erreichen zu können, sind zur Abstimmung des Schwingungstilgers in torsionaler Richtung gemäß einer bevorzugten Ausgestaltung der Erfindung Federelemente zum Verbinden des Innenrings mit dem Massering vorgesehen, die aus einem elastischen Material gebildet sind. Mit anderen Worten kann der Schwingungstilger auf torsionale Frequenzen durch das für die Federelemente verwendete Material oder die Härte dieses Materials eingestellt werden, wodurch größere und kleinere Amplituden des Masserings relativ zu dem Innenring möglich sind und damit einhergehend auch verschiedene Frequenzen von Drehschwingungen kompensiert werden können.

Eine weitere Möglichkeit zur Abstimmung des Schwingungstilgers auf torsionale Frequenzen kann durch geeignete Wahl der Form der Federelemente erreicht werden. Dementsprechend sieht eine Weiterbildung der Erfindung vor, dass die Federelemente den Innenring mit dem Massering stegartig verbinden.

Gemäß einer bevorzugten Ausführungsform der Erfindung erstreckt sich zumindest ein Teil der Federelemente im Wesentlichen in radialer Richtung. Ferner kann auch vorgesehen sein, dass sich gemäß einer Weiterbildung der Erfindung ein Teil der Federelemente schräg zur radialen Richtung erstreckt. Dabei kann erfindungsgemäß vorgesehen sein, dass Federelementpaare mit wenigstens zwei in radialer Richtung konvergierenden oder divergierenden Verbindungsstegen zwischen Innenring und Massering aufweisen. In diesem Zusammenhang ist zu erwähnen, dass die Verbindungsstege getrennt voneinander an ihrem freien Ende am Innenring befestigt und an ihrem entgegengesetzten Ende miteinander und mit dem radial außen liegenden Massering verbunden sein können.

Zur Begrenzung der Amplitude der torsionalen Drehschwingungen sind gemäß einer Ausführungsform der Erfindung eine Mehrzahl von Anschlagkörpern in regelmäßigen Abständen um die Drehachse herum angeordnet. Um die Amplitude von Drehschwingungen zu begrenzen, die der Massering relativ zu dem Innenring unter Verformung der Federelemente ausführen kann, sieht eine bevorzugte Ausführungsform der Erfindung vor, dass die Anschlagkörper zur Begrenzung der Verdrehung des Masserings relativ zu dem Innenring mit den an der Außenumfangsfläche des Innenrings angebrachten Dämpfungskörpern zusammenwirken. Alternativ zu dieser Ausführungsform kann vorgesehen sein, dass die Anschlagkörper zur Begrenzung der Verdrehung des Masserings relativ zu dem Innenring mit wenigstens einem von der Außenumfangsfläche des Innenrings vorstehenden Gegenanschlagkörper zusammenwirken.

Gemäß einer Weiterbildung der vorliegenden Erfindung sind die Dämpfungskörper mit den darauf angeordneten Gleitkörpern um einen vorbestimmten Winkel zur Drehachse des Schwingungstilgers zueinander versetzt, insbesondere in einem Winkel zwischen 60° und 120°. Die Gleitkörper mit den Dämpfungskörpern werden in regelmäßigen Winkelabständen angeordnet, um Unwuchterscheinungen bei radial auftretenden Schwingungen zu vermeiden.

Eine Ausführungsform der Erfindung sieht vor, dass die Federelemente um einen vorbestimmten Winkel zur Drehachse des Schwingungstilgers zueinander versetzt sind, insbesondere in einem Winkel zwischen 30° und 90°.

Gemäß einer Weiterbildung der Erfindung ist die Anzahl der Dämpfungskörper mit den darauf angebrachten Gleitkörpern auf die Anzahl der Federelemente abgestimmt, um das Schwingungsverhalten des Schwingungstilgers in radialer Richtung möglichst unabhängig vom Verdrehungswinkel zu machen. Mit anderen Worten sollten möglichst viele Federelemente und Gleitkörper gleichmäßig um den Umfang des Schwingungstilgers verteilt werden.

Um eine möglichst einfache Herstellung der Gleitkörper/Dämpfungskörper-Kombination zu erreichen, sieht eine bevorzugte Ausführungsform der Erfindung vor, dass die Gleitkörper durch Formschluss oder/und mittels einer Haftmittelbeschichtung an den Dämpfungskörpern befestigt sind.

Die Erfindung betrifft ferner einen Antriebsstrang für ein Kraftfahrzeug mit einem Schwingungstilger der voranstehend beschriebenen Art.

Die Erfindung wird im Folgenden beispielhaft anhand der beiliegenden Figuren erläutert. Es stellen dar:
- Figur 1: eine Vorderansicht eines erfindungsgemäßen Schwingungstilgers ge- mäß einer ersten Ausführungsform der Erfindung;
- Figur 2: eine Schnittansicht des Schwingungstilgers gemäß der ersten Ausfüh- rungsform der Erfindung entlang der Schnittlinie I-I aus Figur1;
- Figur 3a: eine Vorderansicht eines Dämpfungskörpers mit einer Ausnehmung gemäß einem ersten Ausführungsbeispiel;
- Figur 3b: eine perspektivische Ansicht eines Schwingungstilgers gemäß der ers- ten Ausführungsform mit dem Dämpfungskörper aus Figur 3a;
- Figur 4a: eine Vorderansicht eines Dämpfungskörpers mit einer Ausnehmung gemäß einem zweiten Ausführungsbeispiel;
- Figur 4b: eine perspektivische Ansicht eines Schwingungstilgers gemäß der ers- ten Ausführungsform mit dem Dämpfungskörper aus Figur 4a;
- Figur 5a: eine Vorderansicht eines Dämpfungskörpers mit Ausnehmungen gemäß einem dritten Ausführungsbeispiel;
- Figur 5b: eine perspektivische Ansicht eines Schwingungstilgers gemäß der ers- ten Ausführungsform mit dem Dämpfungskörper aus Figur 5a;
- Figur 6: eine Vorderansicht eines Schwingungstilgers gemäß einer zweiten Aus- führungsform der Erfindung.

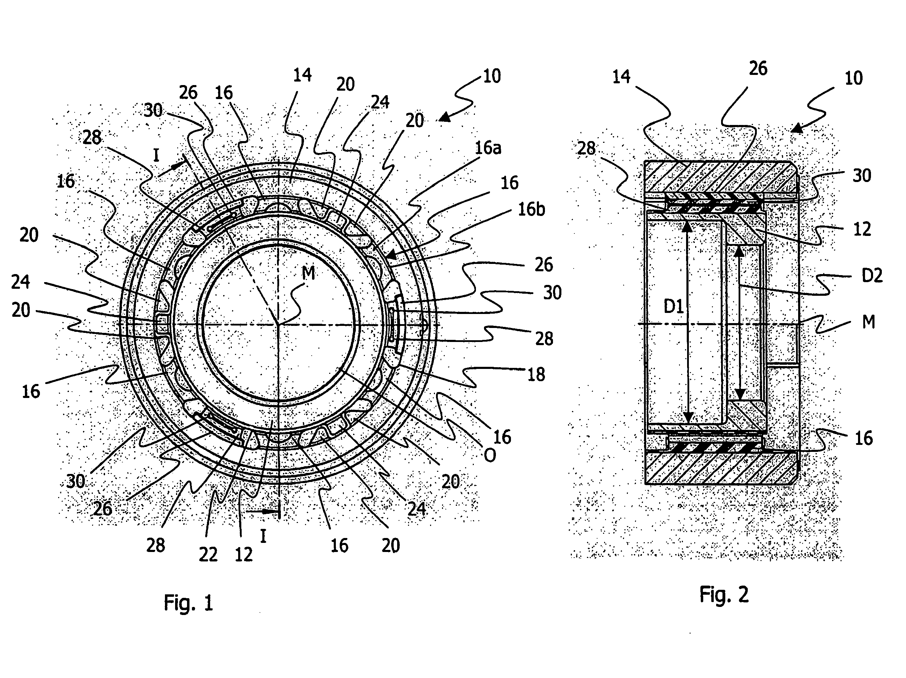

Figur 1 zeigt eine Vorderansicht eines erfindungsgemäßen Schwingungstilgers, der allgemein mit 10 bezeichnet ist. Der Schwingungstilger 10 weist einen um eine Drehachse M drehbaren Innenring 12 auf, um den mit radialem Abstand ein Massering 14 im wesentlichen koaxial angeordnet ist. Der Innenring 12 und der zu diesem Innenring 12 koaxiale Massering 14 sind über Federelemente 16 miteinander verbunden. Der Innenring 12 weist ferner eine Öffnung O auf, mit der der Schwingungstilger 10 an einem Antriebsstrang eines Kraftfahrzeugs, etwa auf einer Getriebeausgangswelle, befestigt werden kann.

An einer Innenumfangsfläche 18 des Masserings 14 sind radial einwärts vorstehende Anschlagkörper 20 vorgesehen, die in regelmäßigen Winkelabständen um die Drehachse M herum angeordnet sind. Ferner erkennt man in Figur 1a von einer Außenumfangsfläche 22 des Innenrings 12 vorstehende Gegenanschlagkörper 24, die zur Begrenzung einer Relativverdrehung des Masserings 14 relativ zu dem Innenring 12 mit den Anschlagkörpern 20 zusammenwirken.

Im Betrieb des Schwingungstilgers 10 begrenzen die Anschlagkörper 20 unter Zusammenwirkung mit den Gegenanschlagkörpern 24 die Amplitude der Drehschwingungen, die der Massering 14 gegenüber dem Innenring 12 unter elastischer Deformierung der Federelemente 16 ausführen kann. Mit anderen Worten kann sich der Massering 14 in einem vorbestimmten Maß relativ zu dem Innenring 12 verdrehen, bevor die Anschlagkörper 20 an dem Massering 14 an den Gegenanschlagkörpem 24 des Innenrings 12 anschlagen.

Ferner erkennt man aus Figur 1, dass die Federelemente 16 jeweils zwei divergierende Verbindungsstege 16a und 16b aufweisen. Die Verbindungsstege 16a, 16b sind getrennt voneinander mit ihrem freien Ende am Innenring 12 befestigt, insbesondere durch Anvulkanisieren. Mit ihrem entgesetzten Ende, in dem die beiden Verbindungsstege 16a und 16b zusammenlaufen, sind die Federelemente 16 an dem radial außen liegenden Massering 14 befestigt, ebenfalls bevorzugt durch Anvulkanisieren. Zur Beibehaltung der Übersichtlichkeit der Figur 1 wurden nur bei einem Federelement 16 die Verbindungsstege 16a und 16b mit Bezugszeichen versehen. Es weisen jedoch alle Federelemente 16 zwei Verbindungsstege auf, wie man leicht erkennt.

In Figur 1 sind zudem Gleitkörper 26 erkennbar, die einem Dämpfungskörper 28 zugeordnet sind. Die Gleitkörper 26 können mittels eines Formschlusses und/oder einer Haftmittelbeschichtung an den Dämpfungskörpern 28, insbesondere durch Anvulkanisieren, befestigt werden. Die Dämpfungskörper 28 sind ihrerseits wiederum an der Außenumfangsfläche 22 des Innenrings angebracht, bevorzugt ebenfalls durch Anvulkanisieren. Die Gleitkörper 26 legen sich an die Innenumfangsfläche 18 des Masserings 14 an, können jedoch im Betrieb des Schwingungstilgers 10 relativ zu dieser verlagert werden.

Man erkennt ferner aus Figur 1, dass die Gleitkörper 26 mit den Dämpfungskörpern 28 in regelmäßigen Winkelabständen, in Figur 1 jeweils um 120°, zueinander versetzt angeordnet sind, um Unwuchterscheinungen bei in radialer Richtung auftretenden Schwingungen zu unterbinden. Die Federelemente 16 sind mit einem Winkel von 60° zueinander versetzt um den Umfang des Schwingungstilgers 10 angeordnet. Die Anzahl der Federelemente 16 und der Anschlagkörper/Gegenanschlagkörper-Anordnungen 20, 24 ist auf die Anzahl der Gleitkörper 26 mit den Dämpfungskörpern 28 abgestimmt, um ein von der Verdrehung des Masserings 14 relativ zu dem Innenring 12 unabhängiges radiales Schwingungsverhalten des Schwingungstilgers 10 zu erhalten. Die Gleitkörper 26 und die Federelemente 16 sind regelmäßig um den Umfang des Schwingungstilgers 10 verteilt, was ebenfalls zur Unabhängigkeit des Schwingungsverhalten in radialer Richtung von dem Verdrehwinkel beiträgt.

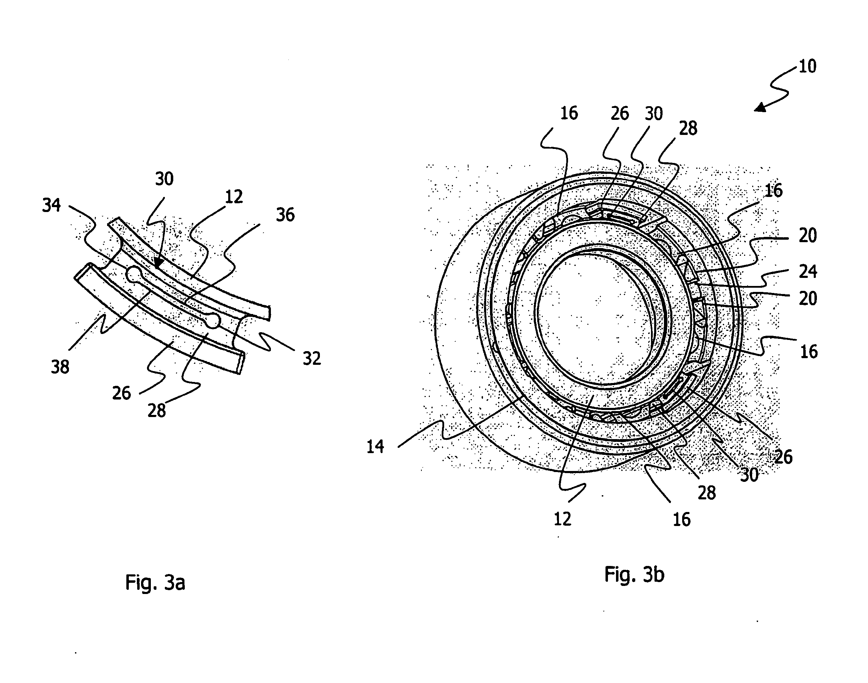

Die Dämpfungskörper 28 sind jeweils mit einer Ausnehmung 30 versehen, die den jeweiligen Dämpfungskörper 28 in axialer Richtung der Drehachse M zumindest teilweise durchsetzt. Die Ausnehmungen 30 in den Dämpfungskörpern 28 können mit verschiedenen Geometrien ausgebildet werden. Auf die zu wählende Form der Ausnehmungen wird im weiteren Verlauf der Beschreibung mit Bezug auf die Figuren 3a bis 5b detailliert eingegangen.

Figur 2 zeigt eine Schnittansicht des Schwingungstilgers 10 entlang der Schnittlinie I-I aus Figur 1. Man erkennt aus Figur 2 wiederum den Innenring 12, der über die Federelemente 16 mit dem Massering 14 verbunden ist. Die Gleitkörper 26 legen sich in Figur 2 an die Innenumfangsfläche 22 des Masserings 14 an. In Figur 2 sind zudem die Ausnehmung 30 in den Dämpfungskörpern 28 angedeutet, die den Dämpfungskörper 28 aus elastisch deformierbarem Material in axialer Richtung der Drehachse M durchsetzen. Die an der Außenumfangsfläche 22 des Innenrings 12 befestigten Dämpfungskörper 28 halten die Gleitkörper 26 bei einer schwingungsbedingten Verlagerung des Masserings 14 relativ zu dem Innenring 12 in ihrer vorbestimmten radialen Position.

Figur 2 zeigt zudem, dass die Öffnung O des Innenrings gestuft ausgebildet ist, d.h. zwei unterschiedliche Durchmesser D1 und D2 aufweist, die jeweils zur Befestigung des Schwingungstilgers 10 an einem Antriebsstrang und/oder einer Getriebeausgangswelle genutzt werden können.

Der Schwingungstilger 10 kann sowohl zum Dämpfen von Drehschwingungen als auch von Schwingungen in radialer Richtung in vorbestimmten Frequenzbereichen abgestimmt werden, wobei erfindungsgemäß die beiden gewünschten Frequenzbereiche in radialer und torsionaler Richtung möglichst unabhängig voneinander beeinflusst werden können. Der Schwingungstilger 10 kann zum Dämpfen der in radialer Richtung auftretenden Schwingungen durch die Dämpfungskörper 28 mit den darauf angebrachten Gleitkörpern 26 abgestimmt werden. Zur Abstimmung der Steifigkeit des Schwingungstilgers 10 kann die Dicke der Gleitkörper 26 bzw. der Dämpfungskörper 28 variiert werden. Mit anderen Worten kann durch die Verwendung von dickeren Gleitsteinen und dadurch entsprechend dünneren Dämpfungskörpern 28 eine geringere Federungswirkung und damit eine höhere Steifigkeit des Schwingungstilgers 10 in radialer Richtung erreicht werden, wodurch der Schwingungstilger 10 auf bestimmte Frequenzen von Schwingungen in radialer Richtung einstellbar ist.

Eine weitere Abstimmungsmöglichkeit auf Frequenzbereiche von in radialer Richtung auftretenden Schwingungen bieten die Ausnehmungen 30 in den Dämpfungskörpern 28 unter den Gleitkörpern 26. Die Ausnehmungen 30 können hierbei in verschiedenen Formen ausgebildet sein, wodurch der Schwingungstilger 10 auf verschiedene Fahrzeugtypen mit unterschiedlichen Antriebssträngen und den entsprechend unterschiedlichen Frequenzen der zu kompensierenden radialen Schwingung eingestellt werden kann.

Die Dämpfungskörper 28 können durch geeignete Wahl der Geometrie der Ausnehmungen 30 derart abgestimmt werden, dass der Massering 14 in radialer Richtung ausreichend abstützt wird, um Umwuchterscheinungen durch radiale Auslenkungen des Masserings 14 relativ zu dem Innenring in einem Frequenzbereich unterhalb der Eigenfrequenz des Schwingungstilgers weitestgehend zu unterbinden. Ferner kann durch entsprechende Wahl der Geometrie der Ausnehmungen 30 erreicht werden, dass im Resonanzfall, d.h. bei Erreichen der Eigenfrequenz des Schwingungstilgers in radialer Richtung, relativ große radiale Schwingwege des Masserings 14 relativ zu dem Innenring zugelassen werden.

Der Schwingungstilger 10 kann über die Federelemente 16 auf Schwingungsfrequenzen in torsionaler Richtung, d.h. Drehschwingungen, abgestimmt werden. Die Federelemente 16 können zum Einen durch ihre Geometrie, wie z.B. der in Figur 1 mit den divergierenden Verbindungsstegen 16a und 16b gezeigten Geometrie, und zum Anderen über das verwendete Material zur Abstimmung des Schwingungstilgers 10 beitragen. Mit anderen Worten können die Federelemente 16 durch das für sie verwendete Material bzw. die Härte dieses Materials auf bestimmte Frequenzbereiche eingestellt werden, da durch das gewählte Material die Amplitude der Auslenkungen des Masserings 14 relativ zu dem Innenring 12 und somit auch die Schwingungsfrequenzen gezielt beeinflusst werden können. Bei der Auslegung des Schwingungstilgers muss ferner die für den zu kompensierenden Frequenzbereich maximal zulässige Amplitude berücksichtigt werden, da diese durch die Anschlagkörper 20 an dem Massering 14 und die Gegenanschlagkörper 24 an dem Innenring 12 festgelegt wird. Mit anderen Worten wird die maximal zulässige elastische Deformierung der Federelemente 16 durch die Anschlagkörper/Gegenanschlagkörper-Anordnungen 20, 24 festgelegt.

Im Folgenden werden mit Bezug auf die Figuren 3a bis 5b verschiedene Ausführungsbeispiele für die Formen der Ausnehmungen 30 in den Dämpfungskörpern 28 beschrieben. Wie bereits erläutert, bieten Ausnehmungen 30 eine Einstellmöglichkeit des Schwingungstilgers 10 auf verschiedene Einsatzgebiete bzw. Fahrzeugtypen bei dessen Auslegung.

Figur 3a zeigt eine Teilansicht eines ersten Ausführungsbeispiels für einen auf dem Innenring 12 angebrachten Dämpfungskörper 28 mit der Ausnehmung 30. Die Ausnehmung 30 ist an ihren Enden 32, 34 zylindrisch aufgeweitet und weist zwischen diesen Enden 32, 34 beabstandete einander zugewandte Kontaktflächen 36, 38 auf. Die Ausnehmung 30 ist hier auch leicht gekrümmt ausgebildet, wobei ihr Krümmungsradius etwa an den Radius des Innenrings 12 angepasst ist. Man erkennt in Figur 3a ferner den auf dem Dämpfungskörper 28 befestigten massiven Gleitkörper 26.

Figur 3b zeigt eine perspektivische Ansicht des Schwingungstilgers 10 gemäß der ersten Ausführungsform der Erfindung mit einem Dämpfungskörper 28 gemäß Figur 3a. Man erkennt in Figur 3b den mit dem Massering 14 über die Federelemente 16 verbundenen Innenring 12 sowie die zur Begrenzung der Amplitude der Drehschwingungen vorgesehenen Anschlagkörper 20 und die mit diesen zusammenwirkenden Gegenanschlagkörper 24. Aus Figur 3b wird zudem ersichtlich, dass sich die Gleitkörper 26 auf den Dämpfungskörpern 28 mit den Ausnehmungen 30 gemäß Figur 3a an die Innenumfangsfläche 18 des Masserings 14 anlegen.

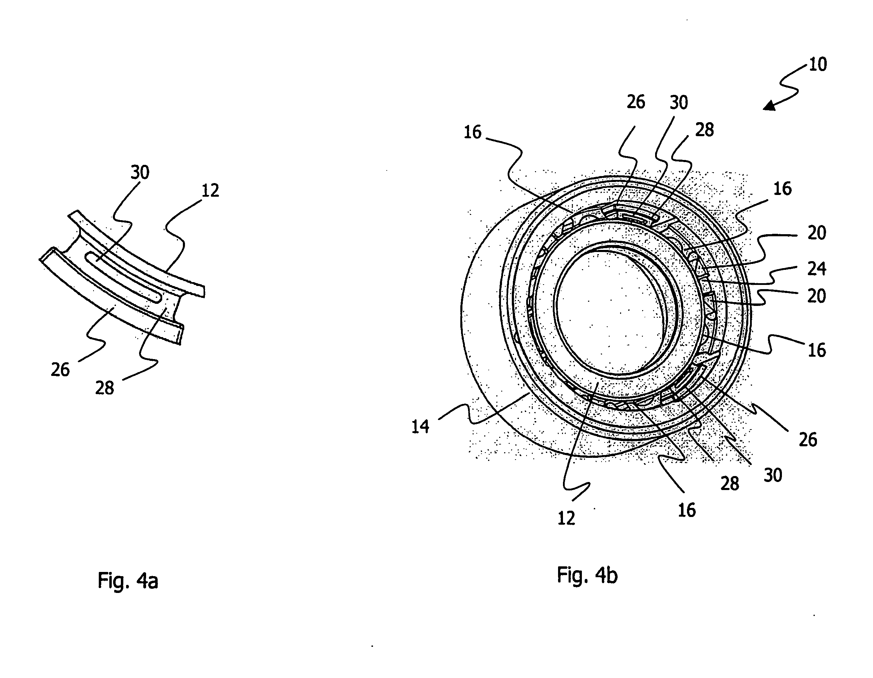

Figur 4a zeigt ein zweites Ausführungsbeispiel für einen Dämpfungskörper 28 mit einer Ausnehmung 30. Die Ausnehmung 30 durchsetzt bei diesem Ausführungsbeispiel den Dämpfungskörper 28 in Form eines Schlitzes mit harmonisch abgerundeten Enden und mit einem in Umfangsrichtung länglichen Verlauf. Ferner weist die Ausnehmung 30 eine dem Radius des Innenrings 12 entsprechende Krümmung auf.

Figur 4b zeigt wiederum eine perspektivische Ansicht des Schwingungstilgers mit einem Dämpfungskörper 28 gemäß Figur 4a.

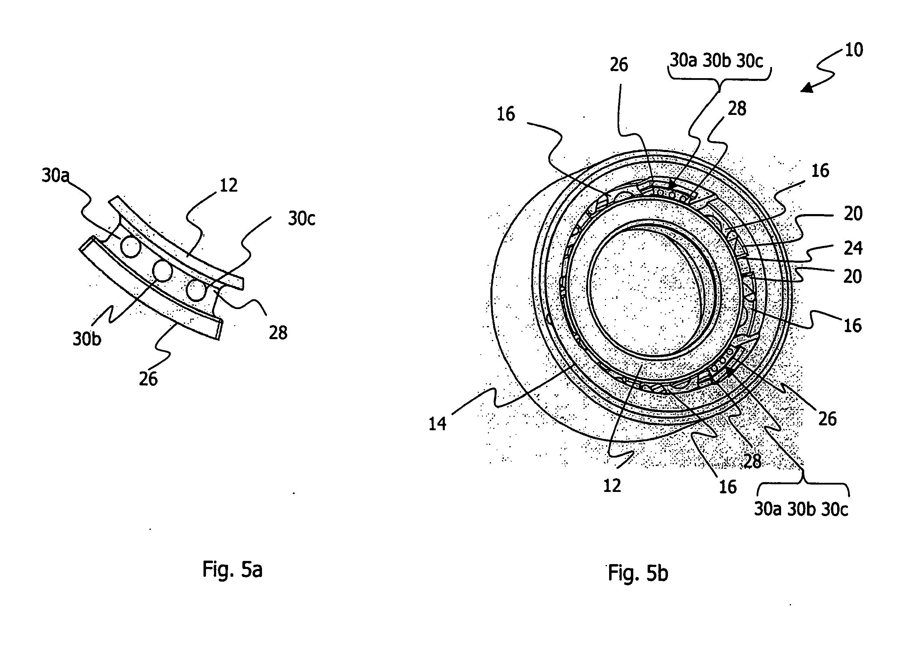

Figur 5a zeigt einen Dämpfungskörper 28 gemäß eines dritten Ausführungsbeispiels mit einer Mehrzahl von in axialer Richtung verlaufenden zylindrischen Ausnehmungen 30a, 30b, 30c, die den Dämpfungskörper durchsetzen.

Figur 5b zeigt eine perspektivische Ansicht des Schwingungstilgers 10, der die Dämpfungskörper 28 mit Ausnehmungen 30a, 30b, 30c gemäß Figur 5a zeigt.

Durch die unterschiedlichen Formen bzw. Geometrien der Ausnehmungen 30 kann der Schwingungstilger 10 auf verschiedene Anwendungsgebiete, d.h. auf verschiedene Fahrzeugtypen mit unterschiedlichen Antriebssträngen und somit auf verschiedene Frequenzbereiche, abgestimmt werden.

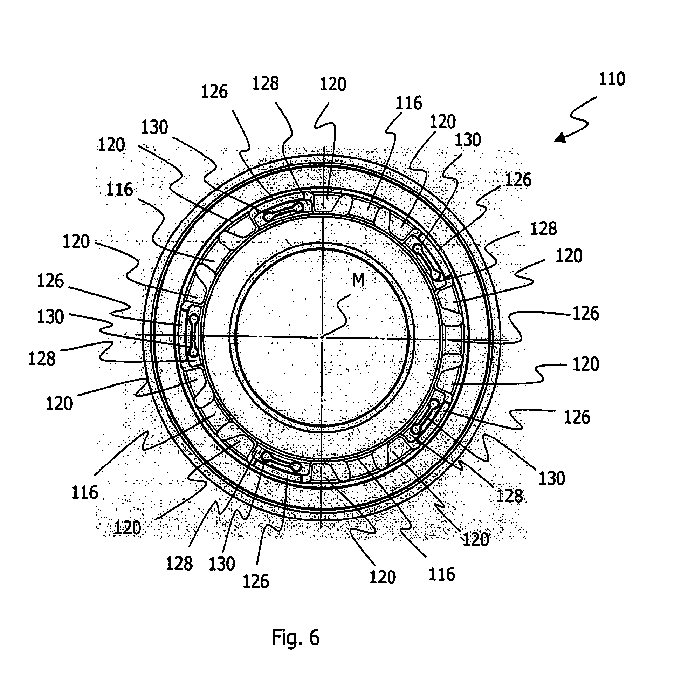

Im Folgenden wird unter Bezugnahme auf Fig. 6 eine zweite Ausführungsform der Erfindung beschrieben, um Wiederholungen zu vermeiden, werden für gleichbleibende oder gleichwirkende Komponenten die gleichen Bezugszeichen verwendet, jedoch mit der Ziffer "1" vorangestellt. Figur 6 zeigt eine Vorderansicht eines Schwingungstilgers 110 gemäß der zweiten Ausführungsform der Erfindung.

Ein erster Unterschied zur ersten Ausführungsform der Erfindung liegt darin, dass bei diesem Schwingungstilger 110 die Federelemente 116 den Innenring 112 stegartig bzw. säulenartig mit dem Massering 114 verbinden, wobei sich die stegartigen Federelemente 116 in radialer Richtung erstrecken.

Ferner erkennt man aus Figur 6, dass die Anschlagkörper 120, die radial einwärts von der Innenumfangsfläche 118 des Masserings 114 zur Begrenzung der Amplitude von Drehschwingungen vorstehen, mit den Dämpfungskörpern 128 zusammenwirken, die an der Außenumfangsfläche 122 angeordnet sind. Mit anderen Worten sind die Gegenanschlagkörper gemäß der ersten Ausführungsform der Erfindung nicht vorgesehen.

Aus diesem Grund zeigt eine vergleichende Ansicht der Figuren 1 und 6, dass die Dämpfungskörper 128 größer ausgebildet sind als die Gleitkörper 126, wohingegen bei der ersten Ausführungsform die Gleitkörper 26 größer als die Dämpfungskörper 28 ausgebildet sind. Die größere Ausbildung der Dämpfungskörper 128 wird notwendig, um eine große Belastung der Verbindungsstelle zwischen Dämpfungskörper 128 und Gleitkörper 126 auf Scherung zu vermeiden.

Aus der voranstehenden Beschreibung wird deutlich, dass der erfindungsgemäße Schwingungstilger durch die Anordnung der Dämpfungskörper unterhalb der Gleitkörper auf Frequenzen in radialer Richtung abstimmbar ist und durch die Geometrien der Federelemente bzw. deren Materialeigenschaften auf Drehschwingungen abgestimmt werden kann, wobei diese beiden Frequenzbereiche unabhängig voneinander beeinflusst werden können.

## Patentansprüche

1. Schwingungstilger (10), insbesondere für einen Antriebstrang eines Kraftfahrzeugs, mit
- einem um eine Drehachse (M) drehbaren Innenring (12),
- einem zu dem Innenring (12) koaxialen Massering (14), der in einem radialem Abstand zu dem Innenring (12) angeordnet ist,
- einer Mehrzahl von Federelementen (16), die den Innenring (12) und den Massering (14) miteinander verbinden, und
- einer Mehrzahl von Gleitkörpern (26) zur Abstützung des Schwingungstilgers (10) in radialer Richtung,
wobei sich die Gleitkörper (26) an eine Innenumfangsfläche (18) des Masserings (14) anlegen und zu dieser relativ verlagerbar sind,
**dadurch gekennzeichnet, dass** wenigstens ein Gleitkörper (26) einem Dämpfungskörper (28) zugeordnet ist, der aus einem elastisch deformierbaren Material ausgebildet und zwischen Innenring (12) und Gleitkörper (26) angeordnet ist.

2. Schwingungstilger (10) nach Anspruch 1,
**dadurch gekennzeichnet, dass** der wenigstens eine Dämpfungskörper (28) wenigstens eine Ausnehmung (30) aufweist, wobei insbesondere die wenigstens eine Ausnehmung (30) den wenigstens einen Dämpfungskörper (28) in axialer Richtung zumindest teilweise durchsetzt, und wobei insbesondere die wenigstens eine Ausnehmung (30) in Umfangsrichtung einen länglichen Verlauf aufweist.

3. Schwingungstilger (10) nach Anspruch 2,
**dadurch gekennzeichnet, dass** die wenigstens eine Ausnehmung (30) um die Drehachse (M) herum einen gekrümmten Verlauf aufweist.

4. Schwingungstilger (10) nach Anspruch 2 oder 3,
**dadurch gekennzeichnet, dass** die wenigstens eine Ausnehmung (30) an ihren Enden aufgeweitet (32, 34) ist und zwischen ihren Enden (32, 34) einander zugewandte Kontaktflächen (36, 38) aufweist.

5. Schwingungstilger (10) nach einem der vorangehenden Ansprüche,
**dadurch gekennzeichnet, dass** die Federelemente (16) zum Verbinden des Innenrings (12) mit dem Massering (14) aus einem elastischen Material gebildet sind, wobei insbesondere die Federelemente (116) den Innenring (112) mit dem Massering stegartig verbinden.

6. Schwingungstilger (10) nach Anspruch 5,
**dadurch gekennzeichnet, dass** sich zumindest ein Teil der Federelemente (16) im wesentlichen in radialer Richtung erstreckt.

7. Schwingungstilger (10) nach einem der Ansprüche 5 oder 6,
**dadurch gekennzeichnet, dass** sich zumindest ein Teil der Federelemente schräg zur radialen Richtung erstreckt, wobei vorzugsweise Federelementpaare (16) vorgesehen sind, die wenigstens zwei in radialer Richtung konvergierende oder divergierende Verbindungsstege (16a, 16b) zwischen Innenring (12) und Massering (14) aufweisen.

8. Schwingungstilger (10) nach Anspruch 7,
**dadurch gekennzeichnet, dass** die Verbindungsstege (16a, 16b) getrennt voneinander an ihrem freien Ende am Innenring (12) befestigt sind und an ihrem entgegengesetzten Ende miteinander und mit dem radial außen liegenden Massering (14) verbunden sind.

9. Schwingungstilger (10) nach einem der vorangehenden Ansprüche,
**dadurch gekennzeichnet, dass** zumindest an der Innenumfangsfläche des Masserings (14) wenigstens ein von dieser Innenumfangsfläche (18) radial einwärts vorstehender Anschlagkörper (20) vorgesehen ist, wobei insbesondere eine Mehrzahl von Anschlagkörpern (20) in regelmäßigen Winkelabständen um die Drehachse (M) herum angeordnet ist.

10. Schwingungstilger (10) nach Anspruch 9,
**dadurch gekennzeichnet, dass** die Anschlagkörper (120) zur Begrenzung der Verdrehung des Masserings (114) relativ zu dem Innenring (12) mit den an der Außenumfangsfläche (122) des Innenrings (112) angebrachten Dämpfungskörpern (128) zusammenwirken.

11. Schwingungstilger (10) nach Anspruch 9,
**dadurch gekennzeichnet, dass** die Anschlagkörper (20) zur Begrenzung der Verdrehung des Masserings relativ zu dem Innenring (12) mit wenigstens einem von der Außenumfangsfläche (22) des Innenrings (12) vorstehenden Gegenanschlagkörper (24) zusammenwirken.

12. Schwingungstilger (10) nach einem der vorangehenden Ansprüche,
**dadurch gekennzeichnet, dass** die Dämpfungskörper (28) mit den darauf angeordneten Gleitkörpern (26) um einem vorbestimmten Winkel zur Drehachse (M) des Schwingungstilgers (10) zueinander versetzt sind, insbesondere in einem Winkel zwischen 60° und 120°.

13. Schwingungstilger (10) nach einem der vorangehenden Ansprüche,
**dadurch gekennzeichnet, dass** die Federelemente (16) um einem vorbestimmten Winkel zur Drehachse (M) des Schwingungstilgers (10) zueinander versetzt sind, insbesondere in einem Winkel zwischen 30° und 90°.

14. Schwingungstilger (10) nach einem der vorangehenden Ansprüche,
**dadurch gekennzeichnet, dass** die Gleitkörper (26) durch Formschluss oder/und mittels einer Haftmittelbeschichtung an den Dämpfungskörpern (28) befestigt sind.

15. Antriebstrang für ein Kraftfahrzeug mit einem Schwingungstilger (10) nach einem Ansprüche 1 bis 14.

## Claims

1. Vibration damper (10), in particular for a drive train of a motor vehicle, comprising:
- an internal ring (12) rotatable about an axis of rotation (M),
- a mass ring (14) coaxial with the internal ring (12) and radially spaced from the internal ring (12),
- a plurality of spring elements (16) connecting the internal ring (12) and the mass ring (14) to each other, and
- a plurality of sliding bodies (26) for radially supporting the vibration damper (10),
- wherein the sliding bodies (26) abut an inner circumferential surface (18) of the mass ring (14) and are displaceable relative to this surface,
**characterized in that** at least one sliding body (26) is associated with one damping body (28) which is formed of an elastically deformable material and is arranged between internal ring (12) and sliding body (26).

2. Vibration damper (10) according to claim 1,
**characterized in that** the at least one damping body (28) comprises at least one recess (30), wherein, in particular, the at least one recess (30), at least in part, axially penetrates the at least one damping body (28), and wherein, in particular, the at least one recess (30) has a longitudinal extension in the circumferential direction.

3. Vibration damper (10) according to claim 2,
**characterized in that** the at least one recess (30) has a curved extension about the axis of rotation (M).

4. Vibration damper (10) according to claim 2 or 3,
**characterized in that** the ends of the at least one recess (30) are enlarged (32, 34) and the recess comprises contact surfaces (36, 38) facing each other in between its ends (32, 34).

5. Vibration damper (10) according to any one of the preceding claims, **characterized in that** the spring elements (16) for connecting the internal ring (12) to the mass ring (14) are formed of an elastic material, wherein, in particular, the
spring elements (116) connect the internal ring (112) to the mass ring in the manner of a bar.

6. Vibration damper (10) according to claim 5,
**characterized in that** at least a part of the spring elements (16) extends substantially radially.

7. Vibration damper (10) according to any one of claims 5 or 6,
**characterized in that** at least a part of the spring elements extends transversely to the radial direction, wherein pairs of spring elements (16) are preferably provided which comprise at least two connecting bars (16a, 16b) radially converging or diverging between internal ring (12) and mass ring (14).

8. Vibration damper (10) according to claim 7,
**characterized in that** the connecting bars (16a, 16b) are separately mounted to the internal ring (12) at their free ends and are connected to each other and to the radially outward mass ring (14) at their opposite ends.

9. Vibration damper (10) according to any one of the preceding claims, **characterized in that** at least one stopper body (20), protruding radially inwards from the inner circumferential surface (18), is provided at least on the inner circumferential surface of the mass ring (14), wherein, in particular, a plurality of stopper bodies (20) are spaced about the axis of rotation (M) at regular angles.

10. Vibration damper (10) according to claim 9,
**characterized in that** the stopper bodies (120) cooperate with the damping bodies (128) arranged on the outer circumferential surface (122) of the internal ring (112) for limiting torsion of the mass ring (114) relative to the internal ring (12).

11. Vibration damper (10) according to claim 9,
**characterized in that** the stopper bodies (20) cooperate with at least one counter stopper body (24) protruding from the outer circumferential surface (22) of the internal ring (12) for limiting torsion of the mass ring relative to the internal ring (12).

12. Vibration damper (10) according to any one of the preceding claims, **characterized in that** the damping bodies (28) with the sliding bodies (26) arranged thereon are offset from each other by a predetermined angle to the axis of rotation (M) of the vibration damper (10), in particular by an angle of between 60° and 120°.

13. Vibration damper (10) according to any one of the preceding claims, **characterized in that** the spring elements (16) are offset from each other by a predetermined angle to the axis of rotation (M) of the vibration damper (10), in particular by an angle of between 30° and 90°.

14. Vibration damper (10) according to any one of the preceding claims, **characterized in that** the sliding bodies (26) are mounted to the damping bodies (28) in a positive fit and/or by means of an adhesive coating.

15. Drive train for a motor vehicle having a vibration damper (10) according to any one of claims 1 to 14.

## Revendications

1. Réducteur de vibrations (10), en particulier pour une ligne de transmission d'un véhicule automobile, comprenant
- un anneau intérieur (12) pouvant tourner autour d'un axe de rotation (M),
- un anneau de masse (14) coaxial à l'anneau intérieur (12) et disposé à une distance radiale de l'anneau intérieur (12),
- une pluralité d'éléments formant ressort (16) qui relient l'un à l'autre l'anneau intérieur (12) et l'anneau de masse (14), et
- une pluralité de corps lisses (26) destinés à soutenir le réducteur de vibrations (10) dans la direction radiale,
lesdits corps lisses (26) étant appliqués contre une surface circonférentielle intérieure (18) de l'anneau de masse (14) et pouvant être déplacés par rapport à celle-ci, **caractérisé en ce qu'**au moins un corps lisse (26) est associé à un corps d'amortissement (28) qui est réalisé à partir d'une matière élastiquement déformable et disposé entre l'anneau intérieur (12) et le corps lisse (26).

2. Réducteur de vibrations (10) selon la revendication 1,
**caractérisé en ce que** ledit corps d'amortissement (28) présente au moins un évidement (30), en particulier ledit évidement (30) traversant pour le moins en partie ledit corps d'amortissement (28) dans la direction radiale, et en particulier ledit évidement (30) présentant une évolution de forme allongée dans la direction circonférentielle.

3. Réducteur de vibrations (10) selon la revendication 2,
**caractérisé en ce que** ledit évidement (30) présente une évolution courbée autour de l'axe de rotation (M).

4. Réducteur de vibrations (10) selon la revendication 2 ou 3,
**caractérisé en ce que** ledit évidement (30) est élargi à ses extrémités (32, 34) et présente, entre ses extrémités (32, 34), des surfaces de contact (36, 38) tournées l'une vers l'autre.

5. Réducteur de vibrations (10) selon l'une des revendications précédentes, **caractérisé en ce que** les éléments formant ressort (16) sont réalisés à partir d'une matière élastique pour relier l'anneau intérieur (12) à l'anneau de masse (14), en particulier les éléments formant ressort (116) assurant comme des barrettes la liaison entre l'anneau intérieur (12) et l'anneau de masse.

6. Réducteur de vibrations (10) selon la revendication 5,
**caractérisé en ce qu'**au moins une partie des éléments formant ressort (16) s'étend pour l'essentiel dans la direction radiale.

7. Réducteur de vibrations (10) selon la revendication 5 ou 6,
**caractérisé en ce qu'**au moins une partie des éléments formant ressort s'étend de manière oblique par rapport à la direction radiale, des paires d'éléments formant ressort (16), qui présentent au moins deux barrettes de jonction (16a, 16b) convergentes ou divergentes dans la direction radiale entre l'anneau intérieur (12) et l'anneau de masse (14), étant préférentiellement prévues.

8. Réducteur de vibrations (10) selon la revendication 7,
**caractérisé en ce que** les barrettes de jonction (16a, 16b) sont, à leur extrémité libre, fixées séparément les unes des autres sur l'anneau intérieur (12) et, à leur extrémité opposée, reliées les unes aux autres et reliées à l'anneau de masse (14) situé radialement à l'extérieur.

9. Réducteur de vibrations (10) selon l'une des revendications précédentes,
**caractérisé en ce qu'**est prévu, au moins sur la surface circonférentielle intérieure de l'anneau de masse (14), un corps de butée (20) faisant saillie radialement à l'intérieur de ladite surface circonférentielle intérieure (18), en particulier une pluralité de corps de butée (20) étant disposée autour de l'axe de rotation (M), à des distances angulaires régulières.

10. Réducteur de vibrations (10) selon la revendication 9,
**caractérisé en ce que** les corps de butée (120) coopèrent avec les corps d'amortissement (128) montés sur la surface circonférentielle extérieure (122) de l'anneau intérieur (112) pour limiter la torsion de l'anneau de masse (114) par rapport à l'anneau intérieur (12).

11. Réducteur de vibrations (10) selon la revendication 9,
**caractérisé en ce que** les corps de butée (20) coopèrent avec au moins un corps de contre-butée (24) faisant saillie de la surface circonférentielle extérieure (22) de l'anneau intérieur (12) pour limiter la torsion de l'anneau de masse par rapport à l'anneau intérieur (12).

12. Réducteur de vibrations (10) selon l'une des revendications précédentes,
**caractérisé en ce que** les corps d'amortissement (28) avec les corps lisses (26) disposés par dessus sont décalés les uns par rapport aux autres selon un angle prédéfini par rapport à l'axe de rotation (M) du réducteur de vibrations (10), en particulier selon un angle compris entre 60 et 120°.

13. Réducteur de vibrations (10) selon l'une des revendications précédentes,
**caractérisé en ce que** les éléments formant ressort (16) sont décalés les uns par rapport aux autres selon un angle prédéfini par rapport à l'axe de rotation (M) du réducteur de vibrations (10), en particulier selon un angle compris entre 30 et 90°.

14. Réducteur de vibrations (10) selon l'une des revendications précédentes,
**caractérisé en ce que** les corps lisses (26) sont fixés aux corps d'amortissement (28) par engagement par complémentarité de forme ou/et au moyen d'un revêtement par agent adhésif.

15. Ligne de transmission pour véhicule automobile équipée d'un réducteur de vibrations (10) selon une des revendications 1 à 14.
